# FASCICULE DE BREVET EUROPEEN

(11) **EP 0 453 329 B1**
(45) Date de publication et mention de la délivrance du brevet: **07.06.1995**
(21) Numéro de dépôt: 91400574.9
(22) Date de dépôt: 01.03.1991
(51) Int. Cl.: F27B 9/20, F27B 9/24, B65G 25/02

(54) **Dispositif pour assurer le déchargement et le transfert de produits sidérurgiques**
Vorrichtung zur Sicherung der Entladung und des Transportes von Stahlwerksprodukten
Device for fastening the unloading and transfer of steel work products

(30) Priorité: 13.03.1990 FR 9003178
(43) Date de publication de la demande: 23.10.1991
(73) Titulaire: STEIN HEURTEY, Société Anonyme:, F-91130 Ris Orangis (FR)
(72) Inventeur: Bigan, Jean Louis, F-91000 Evry (FR); Rostan, Michel, F-78310 Coignieres (FR)
(74) Mandataire: Armengaud Ainé, Alain

(56) Documents cités:
- EP-A- 0 059 306
- EP-A- 0 062 697
- DE-B- 2 402 782
- DE-B- 2 556 721

## Description

La présente invention est relative à une installation autonome conçue de façon à assurer le déchargement, le stockage et le transfert de produits tels que des produits sidérurgiques, notamment du type brames, brames minces, billettes dont la température peut atteindre une valeur de l'ordre de 800° C. Une telle installation peut être notamment utilisée pour assurer le chargement des produits dans une enceinte de maintien en température, l'installation pouvant également permettre d'assurer la translation de la charge à l'intérieur de ladite enceinte et le déchargement des produits un à un.

Il existe à l'heure actuelle des dispositifs permettant de réaliser separément les diverses fonctions mentionnées ci-dessus (EP-A-62 697 et EP-A-59 306). La présente invention s'est fixée pour objectif de concevoir et réaliser une installation unique et autonome permettant de réaliser toutes ces fonctions.

En conséquence, la présente invention a pour objet une installation autonome destinée à assurer notamment le déchargement, le stockage et le transfert de produits, en particulier de produits sidérurgiques qui comporte des longerons fixes sur lesquels reposent les produits à manipuler et des longerons mobiles placés entre les longerons fixes et animés d'un cycle de déplacement rectangulaire, cette installation étant caractérisée en ce que les longerons mobiles sont plus longs que les longerons fixes de façon que des bras ou doigts de chargement ou de déchargement aménagés aux extrémités des longerons mobiles puissent saisir au moins un des produits placé sur des moyens d'alimentation ou déposer un produit prélevé sur des moyens de déchargement.

Selon un exemple de réalisation préféré de l'invention, les doigts de manutention sont au même niveau que les doigts de déchargement. Cependant, il est possible de positionner les doigts de manutention à un niveau différent de celui auquel sont situés les doigts de déchargement de façon que l'opération de manutention des produits soit rendue indépendante de l'opération de déchargement de ces produits.

D'autres caractéristiques et avantages de la présente invention ressortiront des revendications dépendantes et de la description faite ci-après en référence aux dessins annexés qui en illustrent des exemples de réalisation donnés à titre indicatif et dépourvus de tout caractère limitatif. Sur les dessins :
- la figure 1 est une vue d'ensemble en élévation latérale représentant un exemple de réalisation d'une installation selon la présente invention ;
- les figures 2 et 3 sont des vues schématiques et partielles respectivement en élévation latérale et en plan de l'installation objet de l'invention ;
- les figures 4 à 10 sont des vues schématiques similaires à la figure 2 illustrant les différentes étapes d'un exemple de mise en oeuvre d'une installation selon l'invention ;
- la figure 11 est également une vue schématique similaire à la figure 2 illustrant un premier exemple d'application de l'installation conforme à l'invention ;
- la figure 12 est une vue schématique similaire à la figure 11 illustrant une variante de l'application illustrée par cette figure 11 et ;
- la figure 13 est également une vue schématique similaire à la figure 11 illustrant un autre exemple d'application de l'installation objet de la présente invention.

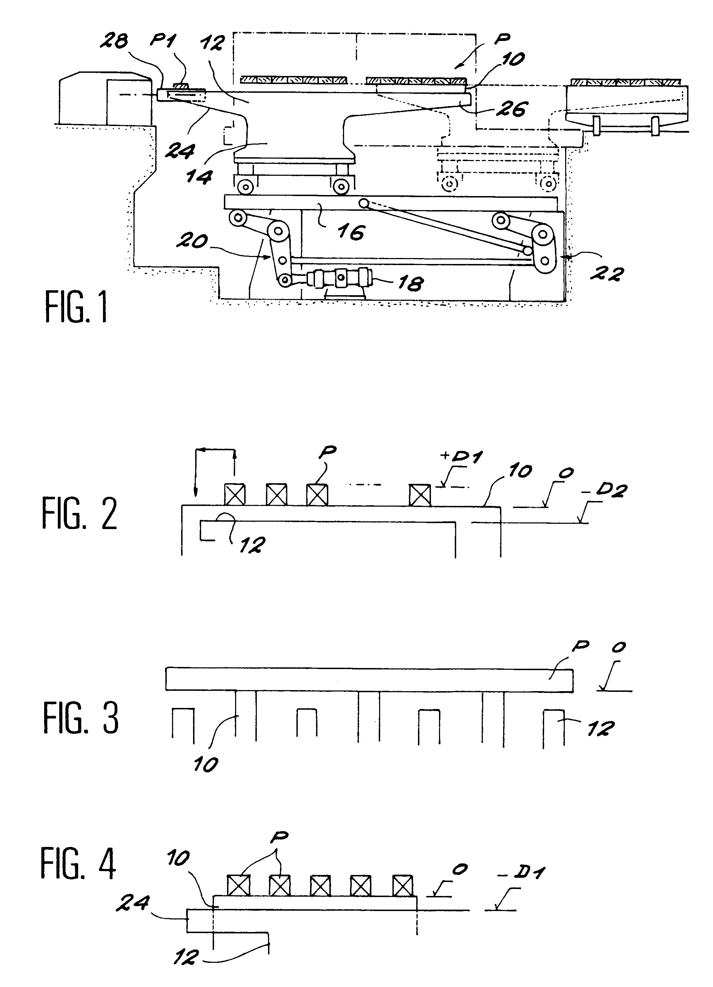

On se réfère en premier lieu aux figures 1 à 3 qui représentent à titre d'exemple non limitatif un mode de réalisation de l'installation conforme à l'invention.

Cette installation comporte des longerons fixes désignés chacun par la référence 10 qui sont situés à un niveau qui dans la description ci-après sera le niveau de référence ou niveau 0. Des longerons mobiles désignés chacun par la référence 12 sont disposés entre les longerons fixes 10 comme on peut le voir sur la figure 3. Ces longerons mobiles 12 sont animés d'un déplacement selon un cycle rectangulaire qui comporte les opérations suivantes :
- une montée verticale les faisant passer du niveau -D2 au niveau +D1 ;
- un déplacement horizontal en palier au niveau +D1 ;
- une descente verticale du niveau +D1 au niveau -D2 et;
- un retour au point de départ par une translation horizontale au niveau -D2.

Ainsi qu'on le verra dans la description du fonctionnement de l'installation faite ci-après, la succession des déplacements successifs mentionnés ci-dessus des longerons mobiles 12 par rapport aux longerons fixes 10 supportant les produits P à manipuler provoque le soulèvement de la série de produits reposant sur les longerons fixes (voir la figure 2), son déplacement horizontal dans un sens ou dans l'autre puis son dépôt à nouveau sur les longerons fixes.

Les longerons mobiles 12 sont montés sur un chariot de support 14 dont les roues peuvent se déplacer horizontalement sur une voie de roulement portée par un bâti mobile 16, le déplacement du chariot mobile 14 (figure 1) pouvant être obtenu à partir de tout moyen classique par exemple des vérins, pignons-crémaillères et similaires. Le bâti mobile 16 peut être déplacé selon un mouvement de translation verticale à l'aide d'un système de galets sur rampes inclinées ou, comme sur la figure 1, de vérin 18 et de bielles articulées 22. Il s'agit là de dispositions classiques bien connues de l'homme de l'art, dont le fonctionnement apparaît clairement de l'examen de la figure 1 et qui ne sera donc pas décrite en détail.

Selon une caractéristique de la présente invention chaque longeron mobile 12 comporte à l'une de ses extrémités au moins un bras ou des doigts tels que 24. Dans la description qui suit ces doigts 24 seront dénommés doigts de déchargement. Ces doigts sont réalisés de manière que lors du transfert d'un produit prélevé parmi ceux qui sont stockés sur les longerons fixes 10, ce produit puisse reposer sur l'extrémité desdits doigts 24 et qu'il puisse être déplacé et transféré vers des moyens de déchargement, de façon totalement indépendante des produits P stockés sur les longerons fixes 10. Dans l'exemple de réalisation illustré par la figure 1, les moyens d'évacuation des produits ainsi séparés et manipulés par les doigts des longerons mobiles de l'installation selon l'invention ont été représentés sous la forme d'une table à rouleaux 28 de type classique.

Dans l'exemple de réalisation particulier illustré par la figure 1, les longerons mobiles 12 comportent également des doigts 26 qui sont situés à leur extrémité opposée aux doigts 24, ces doigts 26 dont la fonction sera précisée ci-après étant désignés alors doigts de manutention.

On décrira maintenant le fonctionnement d'un premier exemple de réalisation d'une installation selon la présente invention dans laquelle les longerons mobiles 12 comportent uniquement des doigts de déchargement 24. Pour ce faire on se réferera aux figures 4 à 10 qui illustrent les différentes étapes successives de cet exemple de fonctionnement.

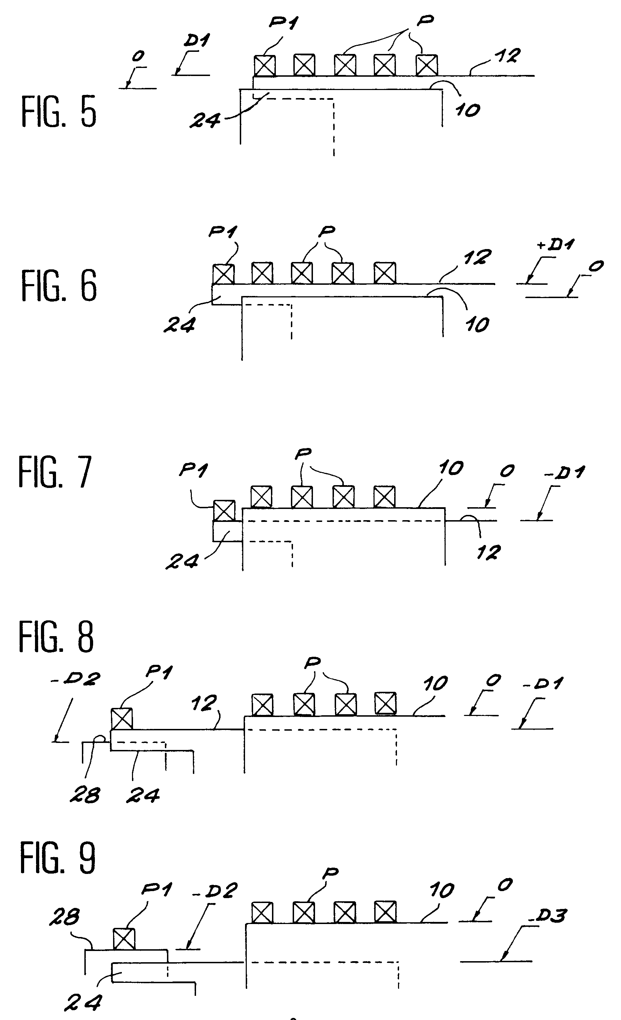

Au début du cycle, c'est-à-dire dans la position illustrée par la figure 4, les longerons mobiles 10 sont positionnés à l'arrêt au niveau -D1, c'est-à-dire en dessous du niveau de la série de produits P qui repose sur les longerons fixes de préférence au niveau O. On commande alors le déplacement horizontal des longerons mobiles 12 de façon que ceux-ci viennent se positionner de manière que les doigts de déchargement 24 soient situés immédiatement en dessous du premier produit P1, c'est-à-dire le produit situé le plus à gauche dans la série de produits P reposant sur les longerons fixes 10. On commande ensuite le soulèvement de l'ensemble des longerons mobiles 12 (figure 5) de façon à soulever la totalité de la série des produits P qui est ainsi amenée jusqu'au niveau +D1.

Les longerons mobiles sont alors déplacés selon un mouvement de translation horizontale au niveau +D1 (figure 6) de manière à placer la face arrière du premier produit P1 à l'aplomb de l'extrémité des longerons fixes 10, ce produit P1 reposant sur l'extrémité des doigts de déchargement 24 des longerons mobiles 12.

On commande ensuite le mouvement de descente de l'ensemble des longerons mobiles 12 de manière à les amener au niveau -D1 (figure 7). Lors de ce déplacement vers le bas, on provoque la séparation du premier produit P1 de la série de produits P reposant sur les longerons fixes 10, étant donné que ce produit P1 repose sur l'extrémité des doigts de déchargement 24, au-delà de l'aplomb vertical de l'extrémité des longerons fixes 10. Cette opération de séparation qui permet d'amener le premier produit P1 au niveau -D1 alors que la totalité des autres produits P de la série demeure au niveau O sur les longerons fixes 10 est parfaitement visible sur la figure 7. Ainsi, à l'issue de cette phase du cycle de fonctionnement on a isolé un produit P1 dont il faut maintenant assurer l'évacuation vers les moyens de déchargement tels que la table à rouleaux 28 représentée sur la figure 1.

Lors de la phase suivante illustrée par la figure 8, les longerons mobiles 12 se déplacent vers la gauche du dessin selon un mouvement de translation horizontale au niveau -D1 de manière à amener le produit P1 isolé de la série P au dessus des moyens de déchargement 28 (zone de dépose ou d'évacuation). On remarquera que cette opération s'effectue de façon totalement indépendante de la série de produits P qui reste immobile sur les longerons fixes 10 au niveau 0.

On commande ensuite le déplacement en descente de l'ensemble des longerons mobiles 12 de manière à les amener au niveau -D2 ce qui permet de déposer le produit P1 sur les moyens de déchargement 28, le mouvement de descente étant poursuivi jusqu'à ce que l'ensemble des longerons mobiles 12 atteignent le niveau -D3 (figure 9). Ainsi, à l'issue de ce cycle de fonctionnement on a déchargé le produit P1 qui a été préalablement isolé de la série de produits P reposant sur les longerons fixes 10. Les autres produits de cette série demeurent bien entendu sur les longerons fixes au niveau 0.

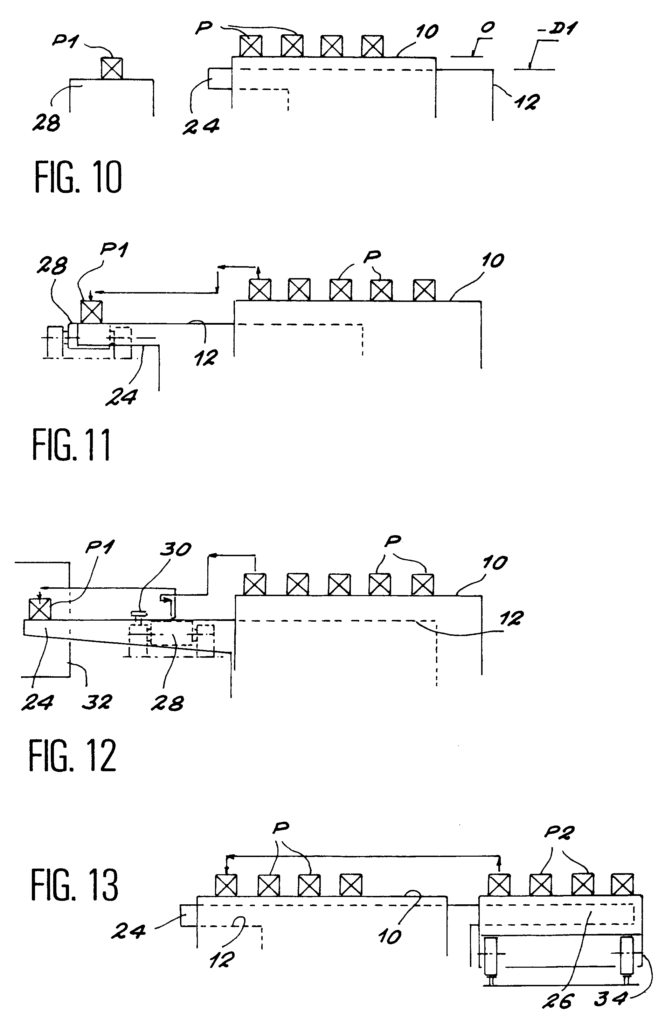

Ensuite, (figure 10) il suffit de provoquer le déplacement en translation arrière des longerons mobiles 12 selon un mouvement de translation horizontale de la gauche vers la droite, en regardant le dessin puis à provoquer un déplacement vers le haut de ces longerons mobiles 12 de manière à les amener au niveau -D1, ce qui place ces longerons mobiles dans la position illustrée par la figure 4 et qui correspond au point de départ du cycle de fonctionnement qui vient d'être décrit. Un nouveau cycle peut alors recommencer.

On peut envisager de nombreux exemples d'application de l'installation décrite ci-dessus. On en donnera certains ci-après, étant entendu que cette description n'est nullement limitative.

La figure 11 illustre un premier exemple d'application dont le cycle de fonctionnement est celui décrit ci-dessus en référence aux figures 4 à 10. Dans cette application, les produits sont déposés sur les longerons fixes 10, les longerons mobiles 12 les saisissent un à un grâce à la présence du bras ou des doigts de déchargement 24 de manière à les séparer et ensuite à les déposer sur la table d'évacuation telle que 28. Ainsi, dans cet exemple d'application on réalise les fonctions suivantes :
- avance progressive de la série de produits P sur les longerons fixes 10 de manière à laisser la zone de chargement-dépose libre derrière cette série ;
- séparation du produit P1 qui est situé à l'extrémité de la série P et que l'on a positionné sur les doigts de déchargement 24 prévus à l'extrémité des longerons mobiles 12 et ;
- déplacement indépendant de chacun des produits ainsi séparés jusqu'à une zone de déchargement appropriée telle que la table à rouleaux 28 du mode de réalisation illustré par les figures 1 et 11.

La figure 12 illustre un second exemple d'application de l'installation objet de l'invention, et elle constitue un développement du mode d'application illustré par la figure 11. Dans ce second exemple d'application, le produit P1 qui a été isolé et séparé de la série de produits P reposant sur les longerons fixes 10 (de la manière décrite ci-dessus) est déplacé par les longerons mobiles 12 de manière à être appliqué contre une butée éclipsable 30, ce qui assure son centrage, il peut être déposé sur la table à rouleaux 28 pour, par exemple être centré, puis il est à nouveau saisi par les longerons mobiles 12, grâce aux doigts de déchargement 24 qui viennent le positionner à l'intérieur d'une enceinte 32 constituée par exemple par un four de réchauffage ou de traitement thermique : il peut s'agir notamment d'une enceinte de maintien en température. Ainsi, dans cet exemple d'application, l'installation autonome objet de la présente invention assure toutes les fonctions de stockage des produits, isolement et évacuation des produits prélevés un à un dans la série reposant sur les longerons fixes, alignement de chaque produit prélevé et enfournement de ce dernier dans l'enceinte de traitement 32.

La figure 13 illustre une variante de l'installation objet de la présente invention. Dans cette variante, les longerons mobiles 12 comportent également des doigts à leur autre extrémité opposée à leur extrémité munie des doigts de déchargement 24. Cette variante correspond donc au mode de réalisation décrit ci-dessus en regard de la figure 1 et elle comporte donc également des doigts de manutention 26 situés à l'extrémité droite des longerons mobiles. Ces doigts 26 permettent de saisir, du côté opposé au déchargement (côté où est située la table à rouleaux 28 sur les figures 11 et 12) un ou plusieurs produits tels que P2 qui sont amenés sur un moyen d'alimentation pouvant être constitué par un chariot tel que 34 ou bien encore par une table à rouleaux.

Dans l'exemple de réalisation illustré par la figure 13, le plan supérieur des doigts de déchargement 24 est au même niveau que celui des doigts de manutention 26. Cependant, il est également possible selon une variante de l'invention de décaler vers le haut par exemple les doigts de déchargement 24 ce qui permet de rendre indépendantes les opérations de manutention des produits et de déchargement. En d'autres termes, il est possible d'assurer le déchargement d'un chariot d'alimentation tel que 34 alors qu'il reste des produits P sur les longerons fixes 10.

Lorsque l'installation décrite ci-dessus est destinée à assurer la manutention, le stockage et le déchargement de produits sidérurgiques, notamment de brames, brames minces, billettes pouvant être à température élevée, par exemple de l'ordre de 800° C, on peut envisager de préférence deux solutions en ce qui concerne le choix des matériaux pour les longerons de l'installation et plus particulièrement pour la réalisation des doigts des longerons mobiles:
- soit utiliser des aciers réfractaires non sujets à la phase sigma ;
- soit utiliser des aciers conventionnels en prévoyant alors des moyens de refroidissement par exemple à l'eau.

Parmi les avantages apportés par l'installation décrite ci-dessus, on peut citer notamment les suivants :
- une seule installation de réalisation facile et relativement peu coûteuse permet d'assurer plusieurs fonctions qui étaient jusqu'à présent assurées séparément par plusieurs machines ;
- le cycle assurant le dépôt du produit P1 isolé de la série de produits P reposant sur les longerons fixes est indépendant de la course de translation de cette série de produits : chaque produit de la série peut avancer d'un pas de stockage à la fois et le produit séparé peut être déposé à une distance importante, par exemple de l'ordre de plusieurs mètres des longerons fixes ;
- l'installation peut assurer elle-même son chargement à partir de tout moyen classique prévu à cet effet, notamment d'un chariot d'alimentation ou d'une table à rouleaux.

Il ressort clairement de la description qui précède que l'invention apporte effectivement une installation ou unité autonome de déchargement, stockage, séparation des produits permettant d'obtenir une alimentation des produits un à un et leur dépose, toutes ces opérations étant réalisées à l'aide d'une seule machine.

## Revendications

1. Installation autonome destinée à assurer notamment le déchargement, le stockage et le transfert de produits, en particulier de produits sidérurgiques qui comporte des longerons fixes sur lesquels reposent les produits à manipuler et des longerons mobiles placés entre les longerons fixes et animés d'un cycle de déplacement rectangulaire, cette installation étant caractérisée en ce que les longerons mobiles (12) sont plus longs que les longerons fixes (10) de façon que des bras ou doigts (26, 24) de chargement ou de déchargement aménagés aux extrémités des longerons mobiles (12) puissent saisir au moins un des produits (P) placé sur des moyens d'alimentation (34) ou déposer un produit (P1) prélevé sur des moyens de déchargement (28).

2. Installation autonome selon la revendication 1, caractérisé en ce que les doigts de manutention (26) étant au même niveau que les doigts de déchargement (24).

3. Installation autonome selon la revendication 1, caractérisée en ce que les doigts de manutention (26) sont à un niveau différent de celui auquel sont situés les doigts de déchargement (24) de façon que l'opération de manutention des produits soit rendue indépendante de l'opération de déchargement de ces produits.

4. Installation autonome selon l'une quelconque des revendications précédentes, caractérisée en ce que au moins les doigts de manutention ou de déchargement prévus aux extrémités des longerons mobiles (12) sont réalisés en aciers réfractaires non sujets à la phase sigma.

5. Installation autonome selon l'une quelconque des revendications 1 à 3, caractérisée en ce que au moins les doigts de manutention ou de déchargement prévus aux extrémités des longerons mobiles (12) sont réalisés en aciers conventionnels et ils comportent des moyens de refroidissement par exemple à l'eau.

6. Application d'une installation autonome selon l'une quelconque des revendications précédentes permettant d'assurer les fonctions suivantes :
- avance progressive de la série de produits (P) sur les longerons fixes (10) de façon à laisser la zone de chargement-dépose libre derrière cette série de produits et ;
- séparation d'un produit (P1) et déplacement indépendant de ce produit séparé par rapport des autres produits pour l'amener à une zone de déchargement appropriée.

7. Application d'une installation autonome selon l'une quelconque des revendications précédentes au chargement de produits sidérurgiques dans une enceinte de traitement thermique, caractérisée en ce que le produit (P1) séparé de la série de produits portée par les longerons fixes, est déplacé et appliqué contre une butée (30) de manière à assurer son centrage, puis déplacé à nouveau par les longerons mobiles (12) afin d'être introduit dans ladite enceinte, les fonctions suivantes étant ainsi assurées : stockage des produits, séparation un à un de chacun des produits de la série, alignement et enfournement successifs des produits séparés.

## Patentansprüche

1. Autonome Vorrichtung insbesondere zur Entladung, Lagerung und zum Transport von Produkten, insbesondere von Eisenhüttenprodukten, die feste Längsträger, auf denen die zu handhabenden Produkte ruhen, und bewegliche, zwischen den festen Längsträgern angeordnete Längsträger aufweist, die in einem rechtwinkligen Verschiebezyklus in Bewegung versetzt sind,
dadurch **gekennzeichnet,**
daß die beweglichen Längsträger (12) auf solche Weise länger als die festen Längsträger (10) sind, daß Arme oder Finger (26, 24) zur Beladung oder zur Entladung, die an den Enden der beweglichen Längsträger (12) eingerichtet sind, mindestens eines von auf Mitteln zur Zuführung (34) plazierten Produkten (P) fassen oder ein entnommenes Produkt (P1) auf Mitteln zur Entladung (28) ablegen können.

2. Autonome Vorrichtung gemäß Anspruch 1,
dadurch **gekennzeichnet**,
daß die Finger zur Handhabung (26) sich auf gleicher Höhe wie die Finger zur Entladung (24) befinden.

3. Autonome Vorrichtung gemäß Anspruch 1,
dadurch **gekennzeichnet**,
daß die Finger zur Handhabung (26) sich auf einer solchen, zur Höhe, auf der die Finger zum Entladen (24) angeordnet sind, unterschiedlichen Höhe befinden, daß der Arbeitsgang der Handhabung der Produkte unabhängig vom Arbeitsgang der Entladung dieser Produkte wird.

4. Autonome Vorrichtung gemäß einem der vorhergehenden Ansprüche,
dadurch **gekennzeichnet**,
daß zumindest die an den Enden der beweglichen Längsträger (12) vorgesehenen Finger zur Handhabung oder zur Entladung aus feuerfesten Stählen hergestellt sind, die nicht der Sigmaphase unterworfen sind.

5. Autonome Vorrichtung gemäß einem der Ansprüche 1 bis 3,
dadurch **gekennzeichnet**,
daß zumindest die an den Enden der beweglichen Längsträger (12) vorgesehenen Finger zur Handhabung oder zur Entladung aus herkömmlichen Stählen hergestellt sind und Mittel zum Kühlen, z.B. durch Wasser, aufweisen.

6. Verwendung einer autonomen Vorrichtung gemäß einem der vorhergehenden Ansprüche zur Sicherstellung der folgenden Funktionen:
- progressives Vorrücken der Reihe von Produkten (P) auf den festen Längsträgern (10) auf solche Weise, daß der Bereich der Beschickung/Ablage hinter dieser Reihe von Produkten freibleibt und
- Abtrennung eines Produktes (P1) und im Verhältnis zu den anderen Produkten unabhängiges Versetzen dieses ausgesonderten Produktes, um es in einen Bereich zur geeigneten Entladung zu bringen.

7. Verwendung einer autonomen Vorrichtung gemäß einem der vorhergehenden Ansprüche zur Beschickung von Eisenhüttenprodukten in einen Raum zur thermischen Behandlung,
dadurch **gekennzeichnet**,
daß das von der Reihe von Produkten, die von den festen Längsträgern getragen sind, abgetrennte Produkt (P1) versetzt und auf solche Weise gegen einen Anschlag (30) gedrückt wird, daß seine Zentrierung sichergestellt ist, daß es darauf von neuem durch die beweglichen Längsträger (12) versetzt wird, um in den Raum eingebracht zu werden, wobei so die folgenden Funktionen sichergestellt sind: Lagerung der Produkte, sukzessive stückweise Abtrennung der Produkte der Reihe, Ausrichtung und sukzessive Ofenbeschickung der abgetrennten Produkte.

## Claims

1. Autonomous installation intended for assuring, notably, the discharge, storage and transfer of products, in particular of iron and steel products, which comprises fixed longitudinal beams on which the products to be handled rest and movable longitudinal beams between the fixed beams, subjected to a rectangular movement cycle, this installation being characterized in that the movable beams (12) are longer than the fixed beams (10) in such a way that loading or discharging arms or fingers (26, 24) formed at the ends of the movable beams (12) can seize at least one of the products (P) situated on the feed means (34) or deposit a product (P1) that has been taken on the discharge means (28).

2. Autonomous installation according to Claim 1, characterized in that the handling fingers (26) are at the same level as the discharge fingers (24).

3. Autonomous installation according to Claim 1, characterized in that the handling fingers (26) are at a level different from that at which the discharge fingers (24) are situated, in such a way that the operation of handling the products is made independent of the operation of discharging these products.

4. Autonomous installation according to any one of the preceding Claims, characterized in that at least the handling or discharging fingers provided at the ends of the movable beams (12) are made of refractory steels not subject to the sigma phase.

5. Autonomous installation according to any one of Claims 1 to 3, characterized in that at least the handling or discharging fingers provided at the ends of the movable beams (12) are made of conventional steels and they comprise cooling means for example using water.

6. Application of an autonomous installation according to any one of the preceding Claims, enabling the following functions to be carried out:
- progressive advance of the series of products (P) on the fixed beams (10) so as to leave the loading-deposition zone free behind this series of products and;
- separation of a product (P1) and independent displacement of this separated product relative to the other products to bring it to an appropriate discharge zone.

7. Application of an autonomous installation according to any one of the preceding Claims to the loading of iron and steel products into a heat treatment enclosure, characterized in that the product (P1) separated from the series of products carried by the fixed beams is displaced and is applied against a stop (30) in such a way as to assure its centering, then is again displaced by the movable beams (12) so as to be introduced into said enclosure, the following functions being thus assured: storage of the products, separation one by one of each of the products from the series, successive alignment and charging into the furnace of the separated products.
